(19) **Europäisches Patentamt**
**European Patent Office**
**Office européen des brevets**

(11) **EP 1 249 017 B1**

(12) **EUROPEAN PATENT SPECIFICATION**

(45) Date of publication and mention
of the grant of the patent:
**24.01.2007 Bulletin 2007/04**

(51) Int Cl.:
*G11B 15/60* (2006.01)   *G11B 15/64* (2006.01)

(21) Application number: **99974140.8**

(22) Date of filing: **28.10.1999**

(86) International application number:
**PCT/US1999/025421**

(87) International publication number:
**WO 2001/031648 (03.05.2001 Gazette 2001/18)**

(54) **POROUS AIR BEARINGS FOR TAPE TRANSPORTS AND METHOD OF FABRICATION THEREOF**

PORÖSE LUFTLAGER FÜR BANDTRANSPORTGERÄT UND HERSTELLUNGSVERFAHREN

SUPPORTS PNEUMATIQUES POREUX POUR DISPOSITIFS DE TRANSPORT DE BANDES ET PROCEDE DE FABRICATION ASSOCIE

(84) Designated Contracting States:
**AT BE CH CY DE DK ES FI FR GB GR IE IT LI LU MC NL PT SE**

(43) Date of publication of application:
**16.10.2002 Bulletin 2002/42**

(73) Proprietor: **Segway Systems, Llc**
**Littleton, CO 80127 (US)**

(72) Inventors:
• **GAVIT, Stephan, E.**
**Lakewood, CO 80227 (US)**
• **STAHL, K., John**
**Littleton, CO 80125 (US)**

(74) Representative: **Hirsz, Christopher Stanislaw et al**
**HLBBshaw**
**Merlin House**
**Falconry Court**
**Baker's Lane**
**Epping Essex CM16 5DQ (GB)**

(56) References cited:
**EP-A- 0 570 853        GB-A- 1 600 918**
**US-A- 3 281 040        US-A- 3 911 490**
**US-A- 3 971 496        US-A- 5 224 641**
**US-A- 5 310 107        US-A- 5 570 831**
**US-A- 5 777 823**

## Description

## FIELD OF THE INVENTION

The present invention is generally directed to tape transport apparatus of the type employed in the data storage industry. More particularly, however, the present invention is directed to air bearings used with such tape transport apparatus which are operative to support a tape on a cushion of air as it is transported through the apparatus, especially across a read/write transducer.

## BACKGROUND OF THE INVENTION

The advent of the information age has seen an exponential growth in the accumulation and storage of data both for on-line usage as well as for archival purposes. In the early days of the computer, before the advent of magnetic disk and optical storage assemblies, data was typically stored on magnetic tapes, such as reel-to-reel tapes and later cassettes. In a magnetic tape storage device, a magnetic coil is used as a transducer to imprint data magnetically on a moving band of magnetic film; thereafter, when the film is advanced across the transducer, the data may be read and re-input into the processor. Magnetic tape has an advantage in that it is relatively low cost and can be erased and rewritten many times. In addition to the medium of magnetic tape, other tape storage media have been developed or are possible. For example, laser written optical tapes may be employed in an effort to increase the density of data stored on the medium.

Magnetic tape is still a highly desirable format for archiving data where the ability to rapidly access the data is of less significance and cost is of concern. The accessibility of data is a function of two variables, the density of storage and the speed at which the tape medium may be transported across and accurately read by the transducer. Here, also, it is important that a lateral edge of the tape be properly registered along a reference plane, called the datum, so that the data may be accurately interpreted.

In any event, where a tape medium is physically moved in a transport direction through a tape transport apparatus, It is necessary both to support the tape during transport and to hold a lateral edge thereof against the datum. Contact of the tape medium with the mechanical parts of the apparatus should be minimized, however, since physical contact between the tape and a mechanical part can cause abrasion of the tape surface or otherwise damage the tape. The elimination of contact Is especially important where the tape is under a load at the place of contact. Such abrasions or damage can violate the integrity of the data stored thereon and can sometimes damage parts of the drive mechanism. Thus, it Is common to employ a plurality of air bearings in order to support the tape in order to reduce or eliminate friction and contact.

A typical air bearing is in the form of a plenum chamber that has a polished metal bearing surface through which a plurality of ports are drilled. These ports, which are typically on the order of .006 to .020 (0.15 to 0.508 mm). Inches in diameter, extend as a matrix over the bearing surface and communicate with the interior of the plenum. The plenum may be then pressurized with air which escapes through the ports thereby providing jets of air which form an air cushion to support the tape medium as it travels across the bearing surface. While this type of air bearing is functional, it is not without Its disadvantages. First, the manufacture of such air bearings is quite expensive since each of the bearing surface ports is individually drilled. Thus, for example, over a surface area of 1.5 to 3.0 square inches, It Is not uncommon to drill 50 to 200 individual ports having this extremely small diameter. Not only is such drilling time consuming, the extremely small size of the drill bits lead to breakage of the bits. Accordingly, there Is a relatively high scrap rate for the air bearings since a broken drill bit may become lodged in a port during the drilling process.

Even where a successful air bearing Is formed of this type, it has a relatively limited openness since only approximately 0.1% of the surface is open due to the ports. Therefore, In order to provide sufficient air cushioning force, to resist the tension on the tape as it is transported, the plenum chambers must be maintained at a sufficient pressure, typically on the order of 1.0 to 12.0 psi. Due to compression of the air, heat is generated which heat must be dissipated; otherwise there is a risk of thermal damage to the tape.

In U.S. Patent No. 5,777,823 issued 7 July 1998 to Gavit, one of the inventors of the present invention, a tape transport apparatus is described. The transport in the '823 Patent uses an air bearing member which has at least a portion of which is fabricated out of a porous material that allows pressurized air to pass therethrough to produce a relatively uniform cushion of air on which a tape may ride. As described in the '823 Patent, the air bearing was formed as a housing having an air inlet adapted to be connected to an air source. The housing and the air bearing member are configured to form a plenum chamber having an interior in fluid communication with the air inlet. Alumina was described as the preferred construction of the porous material.

While the air bearing described in the '823 Patent constitutes a substantial improvement over drilled polished metal air bearings, the construction described therein had some fabrication disadvantages due to the need to seal the porous material at areas where air flow is not desired. Moreover, the mounting of the porous bearing in the metal housing creates some difficulties in mass production. Finally, like other air bearings of the drilled, polished metal type, this air bearing had undesirable variations in the wrap angle for a tape moving off of the portion of the air bearing remote from the recording head and onto a respective take-up or supply reel. This variable wrap angle was known to be a lesser problem for non-air bearing transportation systems utilizing small diameter rollers. These systems, though, have a substantial disadvantage in that the inertia of the rollers are a limiting factor in the rapid acceleration and deceleration of the tape medium; in addition, there is the likelihood of more contact between the tape and the transport rollers.

As noted above, it is also necessary that one lateral edge of the tape be held against the datum so that data may be accurately read or written by the transducer. In the past, this technique has been accomplished by the use of a plurality of spring fingers which carry, at their distal ends, lubricous buttons which bear against a second lateral side edge of the tape, opposite the first lateral edge which is to be held against the datum. While this technique of physically biasing the tape against the datum has been successful, it still leads to undesired contact of the tape medium as it is transported at high speeds across the air bearing. This can cause excessive friction, and the mechanical biasing of the tape can cause damage to the tape edge. Moreover, the tape edge can eventually create undesired grooving of the buttons. In the '823 Patent, the biasing of the lateral edge of the tape against the datum was alternatively accomplished by angling the bearing surface to the datum or by the conventional spring fingers.

Also, in air bearing systems, there are always two locations, i.e., at the opposite ends of the bearing surface, where the tape approaches and departs the bearing. At these locations, the flying height of the tape, that is, the separation distance between the tape and the bearing surface is less at the edges than at the fully wrapped region between the ends. In this fully wrapped region, the pressurized air can escape only at the tape edges. At the departure locations, pressurized air will escape as well. Since there is a loss of support from the air film at these locations as the positive pressure reduces to ambient, tape debris can often accumulate and possibly damage the recording medium. Such debris may also clog the pores of the traditional drilled air bearing. Such problems are exacerbated by the rapid advancement of the tape off of the bearing as the moving tape drags the air forming the cushion off of the bearing surface.

Accordingly, there remains a need for improved tape transport apparatus and, more particularly, for improved air bearings which can support a tape medium during rapid transport through such an apparatus. There is also a need for air bearings that eliminate the disadvantages attendant the individual drilling of ports through the bearing surface in order to provide air jets to form an air cushion that supports the tape. The present invention is directed to meeting these needs.

EP 0 570 853 reflecting the subject matter of the preamble of claim 1 discloses a tape duplicating device comprising a first and second tape guide. A first guide regulates the slave tape tension. The master tape is lengthened by a second guide having the same construction as the first guide to compensate for the lengthening of the tape by a heater and the first guide. Each of the master tape and the tape has a particular product of the Youngs modulus, tape width and tape thickness to provide a controlled strain on the tape when the tension on the tape is regulated.

US 5 224 641 discloses an air bearing for a tape drive. A plurality of air supply holes are provided on the arcuate surface of the tape support to provide the air flow necessary to implement an air bearing. The air from the air bearing is vented through a plurality of slots provided in the surface of the arcuate surface in predefined locations thereon. The use of the plurality of slots provides controllable variability of the air flow in the air bearing and also provides a substantially solid surface on which the tape is transported.

US 3 971 496 discloses tape centering methods and apparatus. An advancing tape is subjected to a first fluid pressure at one of its edge regions and to a second fluid pressure at the other of its edge regions. The first fluid pressure is increased in response to movement of the mentioned one edge region away from a desired tape advance path. The tape is then returned to that desired tape advance path with the aid of the increased first fluid pressure. The second fluid pressure is increased in response to movement of the other edge region away from the desired tape advance path. The tape is thereupon returned onto the desired tape advance path with the latter increased second fluid pressure.

GB 1 600 918 discloses an air guide for recording tape transports, said air guide being characterised by means for feeding air under pressure between the tape and the support surface only to, or adjacent to a first and a second region (where the tape respectively enters and leaves the influence of said support surface), whereby in use an air film of substantially constant local pressure is generated in an air chamber defined by said tape.

US 5,310,107 discloses a pneumatic compliant tape guidance device for pneumatically applying a biasing load to a passing tape media. The tape guidance device includes at least one guide button and associated cylinder in which the guide button travels. It also includes a supply port which provides the input for a pressure and/or a vacuum to a pressurized chamber which couples the supply port with the cylinder.

## SUMMARY OF THE INVENTION

According to the present invention, therefore, an air bearing system and a tape transport apparatus utilizing such air bearing system is provided. The air bearing system is adapted for use on a tape transport apparatus to support a tape on a cushion of air as said tape is transported in a transport direction thereacross.

In its broad form, the air bearing system comprises an air bearing system adapted for use on a tape transport apparatus to support a tape on a cushion of air as said tape is transported in a transport direction thereacross, comprising an air bearing member including an air bearing surface having a first surface portion and a second surface portion, and a source of pressurized air communicating with said air bearing member, said air bearing member constructed such that air escapes through the first surface portion is at a greater flow rate than air that escapes from the second surface portion, wherein the air bearing system also comprises a plenum associated with said air bearing member and in fluid communication with said source of pressurized air, and wherein said air bearing member has a wall with one surface thereof in fluid communication with said plenum and with an opposite surface thereof defining the air bearing surface, said wall being fabricated out of a porous material, a first portion of said wall underlying the first surface portion being thinner than a second portion of said wall underlying the second surface portion.

According to one embodiment of the invention, the first surface portion is formed at a first radius of curvature and the second surface portion is formed at a second radius of curvature which is larger than the first radius of curvature. The air bearing system may include a rib disposed at one end of said air bearing surface and extending transversely thereacross, said rib extending upwardly from the bearing surface and operative to resist flow of air thereacross as the tape moves thereover. There may be a rib at each end of said air bearing surface and extending transversely thereacross. The rib may extend upwardly from the bearing surface a height of between .001 to .004 inch (.026 to 1 .02 mm).

In another embodiment of the invention, the plenum includes a first plenum portion associated with the first surface portion and a second plenum portion associated with the second surface portion, said air bearing member constructed such that air at a first pressure in the first plenum portion will pass therethrough and out of the first surface portion and air at a second pressure in the second plenum portion will pass therethrough and out of the second surface portion; and wherein said source of pressurized air communicates with the first and second plenum portions such that the first pressure is greater than said second pressure whereby the air will flow through said air bearing member and out of the air bearing surface to create the air cushion with there being a differential in the air cushion along the first and second surface portions, respectively.

The air bearing surface may be arcuate in configuration. The first surface portion may be formed at a first radius of curvature and the second surface portion is formed at a second radius of curvature different from the first radius of curvature.

The first radius of curvature may be smaller than the second radius of curvature. The first surface portion may extend for about forty-five degrees of arc and the second surface portion can extend also for about forty-five degrees of arc. The air bearing member may fabricated out of a porous material. The porous material may be selected from a group consisting of ceramics, metals, and composite materials. The porous material may be an alumina silicate. The first and second plenum portions may be separated by a dividing wall of porous material, said source of pressurized air being directly connected to the first plenum portion to supply air at the first pressure and with the second plenum portion being pressurized by air passing through the dividing wall. The dividing wall may be fabricated from a porous material selected from a group consisting of ceramics, metals, and composite materials. The source of pressurized air may include distinct first and second air supplies having different pressures, said first air supply being in fluid communication with the first plenum portion and said second air supply being in fluid communication with the second plenum portion. The bearing member may include a datum face operative to define a guide surface for a first lateral edge of said tape, said datum face oriented in a datum plane that is parallel to the transport direction. The air bearing surface may be oriented at a large acute angle with respect to the datum face. The large acute angle may be within a range of seventy degrees to about ninety degrees. A rib may be disposed at one end of said air bearing surface and extending transversely thereacross, said rib extending upwardly from the bearing surface and operative to resist flow of air thereacross as the tape moves thereover. The rib may be at each end of said air bearing surface and extending transversely thereacross, or extend upwardly from the bearing surface a height of between .001 to .004 inch (.026 to 1.02 mm).

The present invention is also directed to a tape transport apparatus comprising an air bearing system as described above.

These and other objects of the present invention will become more readily appreciated and understood from a consideration of the following detailed description of the exemplary embodiment of the present invention when taken together with the accompanying drawings, in which:

## BRIEF DESCRIPTION OF THE DRAWINGS

Figure 1 is a simplified top plan view of a tape transport apparatus incorporating the improved air bearings of the present invention;
Figure 2 is a perspective view showing an air bearing according to a first exemplary embodiment of the present invention;
Figure 3 is a cross-sectional view taken about lines 3-3 of Figure 2;
Figure 4 is a cross-sectional view taken about lines 4-4 of Figure 2;
Figure 5 is a front view in elevation showing a first alternate embodiment of an air bearing according to the present invention;
Figure 6 is a cross-sectional view taken about lines 6-6 of Figure 5;
Figure 7 is a cross-sectional view, similar to Figure 4, showing a second exemplary embodiment of an air bearing unit according to the present invention:

Figure 8 is an exploded perspective view of the air bearing unit according to a third exemplary embodiment of an air bearing according to the present invention;

Figure 9 is a top plan view showing the porous air bearing body according to the third alternative embodiment of the present invention shown in Figure 8;

Figure 10 is a top plan view, similar to Figure 9, showing the assembled air bearing unit of Figure 8;

Figure 11 is a cross-sectional view taken about lines 11-11 of Figure 10;

Figure 12(a) is a diagrammatic view in cross-section, showing the relative angle of the air bearing surface to the datum along with the drill angle of the air supply bores according to the present invention;

Figure 12(b) is a cross-sectional view, similar to Figure 12(a), showing a first alternative drilling of the air supply bore according to the present invention;

Figure 12(c) is a cross-sectional view, similar to Figures 12(a) and 12(b), showing a second alternative arrangement of the air supply bores according to the present invention;

Figure 12(d) is a cross-sectional view, similar to Figures 12(a)-12(c), showing an alternative configuration of the air supply bores according to the present invention;

Figure 13(a) is a diagrammatic view showing the tape sag at a departure location from an air bearing according to the prior arts; Figure 13(b) is a diagrammatic view showing the outrigger rib according to the present invention; and

Figure 13(c) is a diagrammatic view showing an alternative outrigger rib according to the present invention.

## DETAILED DESCRIPTION OF THE EXEMPLARY EMBODIMENTS

The present invention is broadly directed to a tape transport apparatus used in the data storage industry. This tape transport apparatus is operative to transport the tape medium in a transport direction across a read/write transducer in order to either place or access data on a medium, such as a magnetic tape. While the present invention is described specifically with respect to magnetic tape media, it should be understood that the principles described herein may be employed with other tape media without restriction. Moreover, while the term "read/write transducer" or "recording head" is used, the same may refer to a write transducer, a read transducer or a transducer that is able to perform both reading and writing functions.

The present invention is particularly directed, however, to an air bearing unit that is connectable to a pressurized air source in order to provide a cushion of air along the bearing surface so that the tape medium may be supported on the cushion of air as it moves in the transport direction. An important aspect of this air bearing is that it employs a dual radius so as to accommodate departure variance angle of the tape medium that occurs when a supply or take-up reel is either at an extreme "near empty" condition or an extreme "near full" condition.

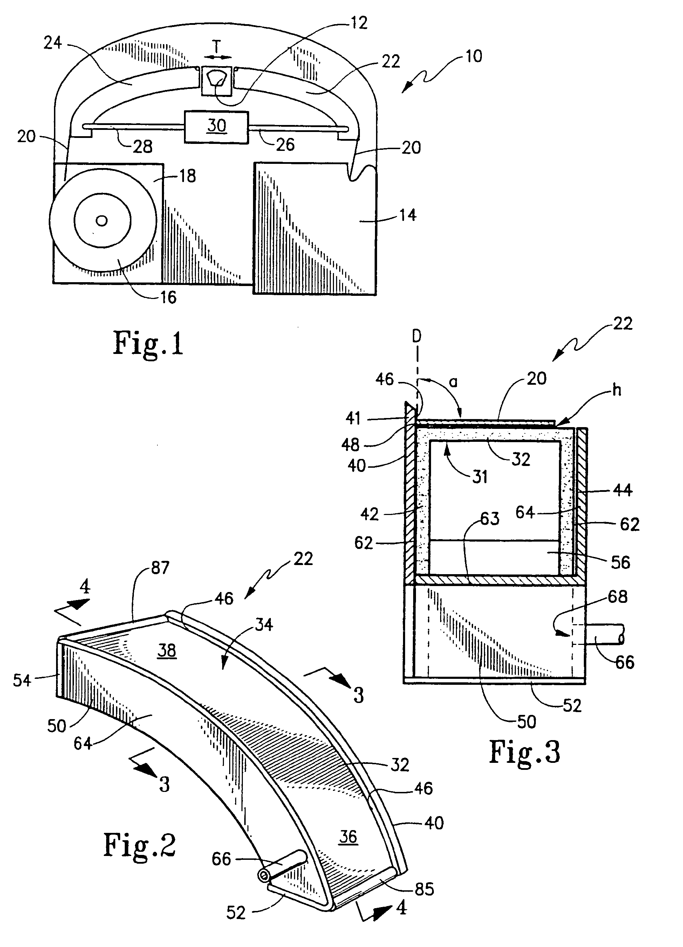

With reference, then, to Figure 1, it may be seen that a diagram of a representative tape transport apparatus 10 includes a read/write transducer 12, a cartridge supply reel 14, a take-up reel 16 and a motor drive 18. Motor 18 Is operative to transport a lape 20 in a reversible tape drive direction "T". Tape 20 Is supported from movement across transducer 12 by means of a pair of air bearings 22 and 24, described more thoroughly below. Pressurized air from air source 30 is supplied to air bearings 22 and 24, respectively, by conduits 26 and 28. Air source 30 can be of any type known in the art for providing pressurized air to the system.

A first representative air bearing 22 is shown In Figures 2-4. It should be understood that air bearing 24, in this first exemplary embodiment, is substantially a mirror image of air bearing 22, although it need not be such to implement the teachings of this invention. Thus, a description only of air bearing 22 Is provided for simplicity. As is shown, then, in Figures 2-4, air bearing 22 includes an air bearing member in the form of a porous body 31 that has an upper wall 32 formed at a thickness "$t_1$" and provides an upper air bearing surface 34 that includes a first surface portion 36 and a second surface portion 38. Porous body 31 includes a pair of sidewalls 42 and 44 that each downwardly depend from upper wall 32 at approximately a right angle thereto. A datum plate 40 Is mounted to wall 42 and provides a datum 41 that projects upwardly to have a datum face 46 against which a first lateral edge 48 of tape 20 is to be guided. Datum wall 46 Is oriented in a datum plane "D".

Porous body 31 is constructed of any suitable porous material including, for example, ceramics, metals and composites, so long as the material is sufficiently open to permit passage of air in a quantity and at a flow rate that is able to create the air cushion. It is preferred that the porous material be in the range of between .01 and .06  in$^3$/sec/in$^2$/per PSI/in ($9 \times 10^{-9}$ and $5.4 \times 10^{-8}$ m$^3$/sec/m$^2$/per kg m$^2$/m). This porous material may be sintered or non-sintered, depending upon Its composition, and likewise may be impregnated with a selected adhesive to control porosity. Where metal is used, It should be non-magnetic if it is intended for use with magnetic tape media. The preferred porous material is an alumina silicate known as mullite such as that having a composition of three parts alumina to two parts silica. Datum plate 40 is preferably formed of a solid ceramic material, such as alumina.

An L-shaped support bracket 50 is secured to air bearing member 22. Bracket 50 has a lower plate portion 63 oriented along the lower edges of sidewalls 42 and 44 and a side plate portion 64 oriented alongside side wall 44, Lower plate portion 63 Is arcuate In shape and extends generally parallel to air bearing surface 34. End plates 62 and 54 respectively seal the opposite ends of air bearing 22.

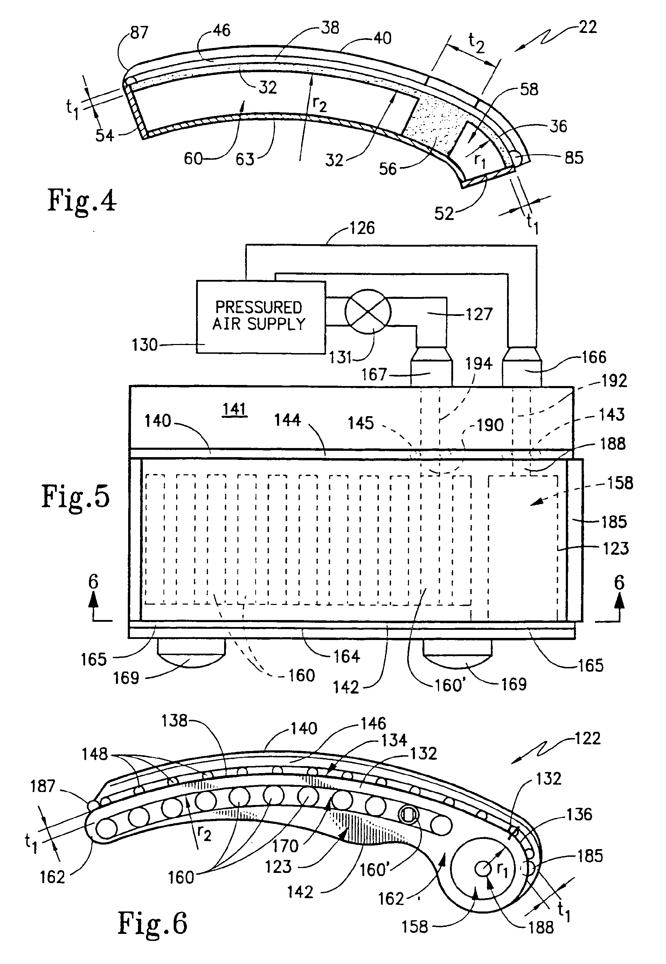

As is shown in Figure 4, porous body 31 of air bearing 22 includes a barrier wall 56 which depends downwardly from upper wall 32 and which extends completely across between sidewalls 42 and 44. It should be understood that barrier wall 56 separates the interior of porous body 31 into a first plenum 58 and a second plenum 60. Moreover, It should be understood that upper wall 32, sidewalls 42 and 44 and barrier wall 56 are preferably integrally formed as a single piece of porous material. As noted above, this material allows pressurized air in plenum 58 and 60 to pass through upper wall 32 and out of bearing surface 34 In order to produce a cushion of air that supports tape 20 above air bearing surface 34 at a flying height "h" (Figure 3). Typically, this flying height is desired to be on the order of .001-.004 (0.025 - 0.102 mm) inches.

In order to seal sidewalls 42 and 44 against leakage of pressurized air, a suitable coating 62 is provided completely around the exterior of air bearing member 22 except along air bearing surface 34. This can be accomplished by entirely coating a molded air bearing member 22 with a suitable material, such as paint, epoxy or other suitable sealing film. Such film may be applied by techniques known In the art, for example, by a spray method or vacuum vapor deposition. This coating is then removed, either by self-suitable solvent or by machining along air bearing surface 34.

In order to introduce air into first and second plenums 58 and 60, side plate 64 of bracket 50 is mounted generally flush with sidewall 44 and, due to the presence of coating 62, it is not necessary to seal plate 64 against sidewall 44. Side plate 64 is provided with a nipple 66 that may be connected to a conduit, such as conduit 26, noted above, with this conduit communicating with the source of pressurized air 30. Nipple 66 also is in fluid communication with an opening 68 shown in phantom in Figure 3, with opening 68 extending through sidewall 44 so that air can pass into plenum 58.

The purpose and function of barrier wall 56 can now be more fully appreciated. As was noted in the background of the invention, it is desirable to minimize the departure variance angle of tape 20 at the ends of each of bearings 22 and 24 that are proximate to the supply and take-up reels 14 and 16, respectively. That is, it is desired that the area of air bearings 22 and 24 located approximate to the supply and take-up reels be as small a radius of curvature as possible. Thus, air bearings 22 and 24 are provided with an air bearing surface 34 that has a first surface portion 36 formed at a relatively small radius of curvature "$r_1$" in the region proximate to the supply and take-up reels and with a second surface portion 38 formed at a larger radius of curvature "$r_2$" that terminates adjacent transducer 12. Thus, as is shown in Figure 4, air bearing surface portion 36 is formed at a

radius of curvature "$r_1$" that is approximately 0.5 inch (1.27 cm) with this curvature extending for approximately 45° of arc. Second air bearing surface portion 38 is formed at a radius of curvature of "$r_2$" that is approximately 2.0 inches (5.08cm) and that also extends for approximately 45° of arc.

However, it should be understood that for a material of uniform porosity of uniform thickness, the flow characteristics of air through the material is described by the equation:

$$\phi = \rho \times \mu \times P \times A/t$$ .

where

$\phi$ = mass flow rate (Ibm/sec) (kg/s)

$\rho$ = air density (Ibm/in3) (kg/m$^3$)

$\mu$ = bearing permeability (In4/Ibf-sec) (m$^4$/kg-sec)

$P$ = appHed plenum pressure (psi) (kg/m$^2$)

$A$ = cross-sectional area through which air (m$^2$) flows (in2) and

$t$ = material thickness (in), (m)

However, it is an object of the air bearing to float the tape at a constant or controlled distance, that is, "flying height", above the air bearing surface 34. The pressure which may be applied to float the tape is governed by the equation $P = T/R$ where T is the tension per unit width of the tape and R is the radius of the wrap angle. Accordingly, where "$r_2$" is four limes "$r_1$", it is necessary to pressurize first plenum 58 at four times the pressure of second plenum 60 in order to get a uniform fly height. This can be accomplished, naturally, by having separate pressure supplies for first and second plenums 58 and 60. However, It is also possible to accomplish the pressure differential by supplying from a single pressure source. For example, a single pressure source may be split into two pressure lines, with one pressure line supplying plenum 58 and the other pressure line supplying plenum 60. In such case, the pressure line supplying plenum 60 would be provided with a pressure reducing orifice so that the pressure in plenum 60 would be one-fourth the pressure in plenum 58.

The present invention, though, provides a more simplified procedure by supplying plenum 58 with pressurized air and separating plenum 58 from plenum 60 by porous barrier wall 56 that has a thickness "$t_2$". Where the thickness of upper wall 32 is "$t_1$" the thickness of "$t_2$" of barrier wall 56 should be $3t_1$. Thus, pressurized air passing through air bearing portion 36 is four times the pressure of air passing through second surface portion 38 since air passes only through a single thickness "$t_1$" associated with plenum 58 while air at the supplied pressure must pass through a thickness of "$3t_1$" plus "$t_1$" equals "$4t_1$" to pass through the wall portion at second surface portion 38. Accordingly, where "$r_1$" is one-fourth "$r_4$", the pressure balances to provide a relatively uniform air cushion with a smaller wrapping radius at plenum 58.

With reference to Figures 5 and 6, a second exemplary embodiment of a dual plenum chamber is shown here with the plenums having air supplied at different pressures. In Figures 5 and 6, then, air bearing 122 is shown and is in the form of a solid body 123 of porous material, as described above, molded as a unitary piece having an air bearing surface 134. A datum plate 140 is disposed on the bottom side of air bearing 122 and sandwiched between a mounting plate 141 and body 123. Datum plate 140 is formed of a solid ceramic material, carbide or other magnetic or non-magnetic material. A top plate 164 is disposed on the top side of body 123 and is provided with a pair of nipples 166 and 167. Gasket 165 is sandwiched between top plate 164 and body 123. Bolts 169 secure the assembly together.

With reference to Figures 5 and 6, it may be seen that air bearing surface 134 is divided into a first surface portion 136 and second surface portion 138. Surface portion 136 is arcuate and formed along a radius of curvature "$r_1$" similar to that described in the embodiment shown in Figures 2-4. Likewise, second surface portion 138 is formed at a radius of curvature "$r_2$", which is four times larger than "$r_1$" and also that is similar to that described with respect to the embodiment described above. Air bearing 122 has an effective upper wall 132 formed generally at a constant thickness "$t_1$". This upper wall portion 132 is defined by a plurality of bores that are formed in body 123 of air bearing 122.

To this end, a first air supply bore 158 is drilled from top wall 142 generally parallel to first surface portion 136 and passes through body 123. A first supply port 188 penetrates bottom wall 144 and is in fluid communication with first air supply bore 158. Air supply bore 158 then defines a first plenum for air bearing 122. A plurality of second air supply bores 160 are drilled parallel to one another and to bore 158. As is shown in Figures 5 and 6, eleven such air supply bores 160 are drilled from top wall 142 almost completely through body 123; however, only bore 160' penetrates bottom wall 144 to provide a second supply port 190. The tangent to bores 160 and the tangent to bore 158 are equidistantly spaced from air bearing surface 134 so again it is necessary to supply bore 158 with pressure at four times the amount of pressure of air supply bores 160.

To this end, the mouths of air supply bores 160 at the top of the air bearing are in fluid communication with one another by a common manifold channel 170. Second air supply port 190 is in communication with passageway 194 formed through mounting plate 141 and an opening 145 in datum plate 140. Channel 170 is thus in fluid communication with nipple 167 by way of bore 160'. Nipple 166 of mounting plate 141 is in fluid communication with air supply bore 158 through passageway 192 in mounting plate 141 and opening 145 in datum plate 140.

A pressurized air supply 130 supplies pressured air directly through conduit 126 to nipple 166 and likewise supplies pressurized air through a four to one pressure reducing orifice 131 through conduit 127 to nipple 167. Thus, air supply bores 160 are at a pressure that is one-fourth the pressure of air supply bore 158. Since the wrap radius "$r_1$" is one-fourth of the wrap radius "$r_2$", a uniform cushion of air is provided for a tape moving over air bearing surface 134 due to the differential between the air pressure at air bearing surface portion 136 vis a' vis bearing surface portion 138.

The structure shown in Figures 5 and 6 provide advantages in manufacture. Here, the solid cast body portion 123 may be molded and hardened out of any suitable porous material as described above. This entire body portion may be dipped, sprayed or otherwise coated with a sealant material that prevents the passage of air therethrough. Bores 158, 160 and manifold channel 170 may be then formed in body member 123 which exposes the porous material. Air bearing surface 134 may be then formed by either a machining operation to remove the coating along air bearing surface 134 or by a suitable solvent to remove the coating. Accordingly, air bearing member 122 remains sealed by coating 162 at all regions except along manifold channel 170, the mouth of air supply bore 158 and air bearing surface 134.

Plate 164 may then be mounted, in any suitable manner in sealed relation to sidewall 142, such as by a gasket or by any other means. A datum plate 140 may then be mounted opposite plate 164 to provide a flat datum face 146. A plurality of strategically placed bleed holes 148 are formed through datum plate 140 with these openings being generally circular in cross-section. Bearing surface 134 diametrically intersects ports 146. This allows any excess air pressure to bleed away from air bearing surface 134 during use. In low pressure applications, bleed holes 148 may be eliminated due to the low air flow conditions.

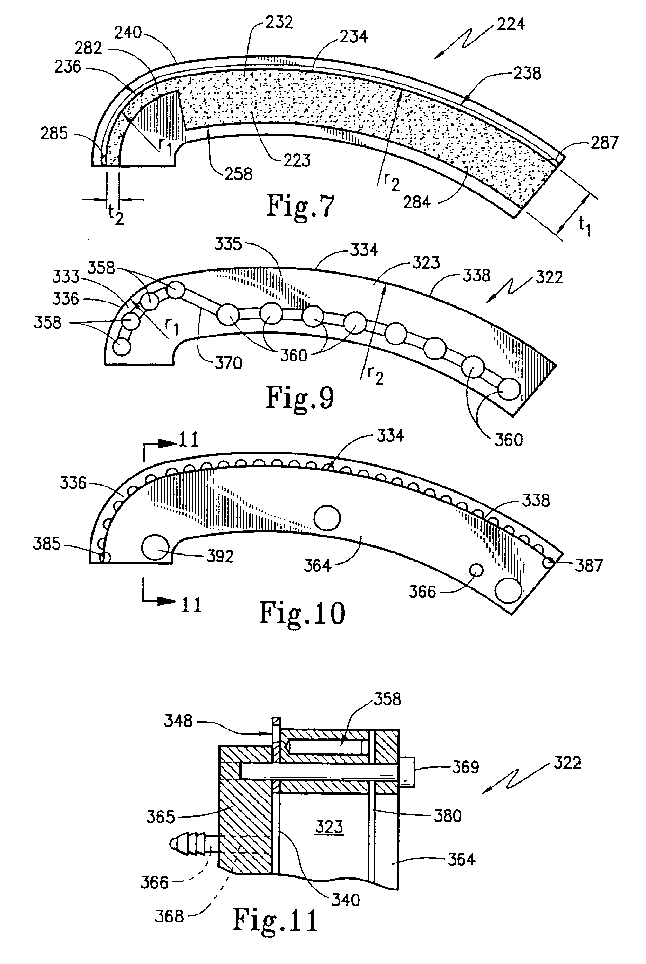

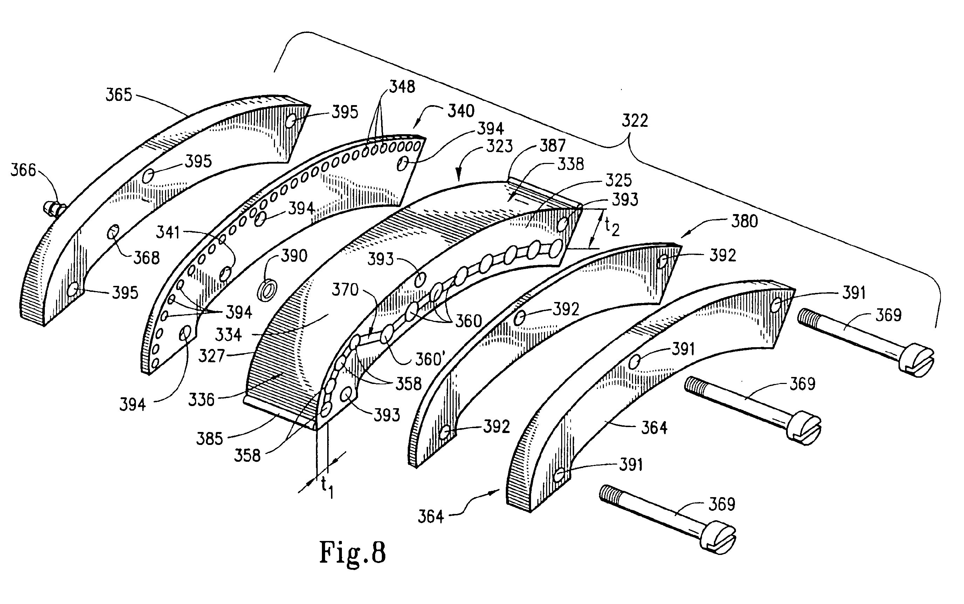

A third exemplary embodiment of the present invention is shown in Figure 7. Figure 7 is a cross-sectional view similar to Figure 4, but for an air bearing 224 that would correspond to air bearing 24 in Figure 1. Here, air bearing 224 has a body portion 223 that provides an air bearing surface 234 divided into a first air bearing surface portion 236 and a second air bearing portion 238. A datum 240 is provided that is similar to datum 40, described above. In this embodiment, upper wall 232 is formed in two sections, 282 and 284 which correspond respectively to first surface portion 236 and second surface portion 238, respectively. Upper wall portion 282 has a thickness "$t_1$" while wall portion 284 has a thickness "$t_2$" that is four times the thickness of "$t_1$". A single plenum 258 is then provided so that pressurized air may pass from plenum 258 through upper wall 232. Due to the difference in thickness of wall 232, however, pressure is four times greater at first surface portion 236 then at second surface portion 238. However, since the wrapping radius of second surface portion 238 is four times the radius of second surface portion 236, a generally uniform flying height for a tape transported thereacross will result. In this embodiment, again, a suitable coating may be provided to seal the sides and ends of air bearing 224 and a suitable plate providing communication between a pressurized air source and plenum 258 may be employed.

The most preferred embodiment of the present invention, at the time of filing this application, is shown in Figures 8-11. In this embodiment, air bearing member 322 is formed by a porous member 323 that is coated in the manner described with respect to the embodiment shown in Figures 5 and 6. Here, porous member 323 has an air bearing surface 334 having a first surface portion 336 formed at a small radius of curvature "$r_1$" and a second air bearing surface portion 338 formed at a larger radius "$r_2$". A plurality of air supply bores 358 and 360 are respectively associated with air bearing surface portions 336 and 338. To this end, air supply bores 360 are located at a distance "$t_2$" that is four times further away from surface portion 338 than the distance of separation "$t_1$" between surface portion 336 and air supply bores 358. Due to this difference in spacing, bores 358 and 360 may be connected by a common manifold channel 370 and supplied at a common air pressure. It should now be understood that wall portion 333 will pass four times the amount of air per unit area as wall portion 335. However, due to the wrap radii, tape 20 will float on a cushion of air that is generally uniform across air bearing surface 334.

In assembly, the porous member 323 of air bearing member 322 and datum plate 340 are mounted between a top mounting plate 364 and a bottom mounting plate 365 by means of bolts 369. It should be understood that bottom mounting plate 365 could be part of the structure or housing of the tape transport apparatus instead of a separate piece attached to that structure. In any event, an air supply nipple 366 is provided that communicates through a bore 368 in plate 365, for example, so that air may flow through nipple 366, through bore 368, through an air supply bore 360' and into manifold channel 370. Datum plate 340 is provided with bleed holes 348 in a manner similar in purpose and function as bleed holes 148.

To this end, air supply bore 360' is drilled completely through porous member 323 in a manner similar to that described with respect to air supply bore 160' depicted in Figure 5. Of course, it should be appreciated that any of air supply bores 358, 360 could be employed for this purpose of communicating with the pressurized air supply with the remaining air supply bores drilled a majority of the distance through top wall 325 and porous member 323 without penetrating bottom wall 327 thereof.

In order that air can pass through datum plate 340, an opening 341 is provided; this opening is sealed in assembly by an O-ring 390 that seats against wall 327 of porous member 323 and bottom plate 365. A gasket 380 is used to seal manifold channel 370, and this gasket 380 is sandwiched between top mounting plate 364 and porous member 323. Bolts 369 then extend through openings 391-394 formed respectively in top mounting plate 364, gasket 380, porous member 323 and datum plate 340. The threaded ends of bolts 369 are secured in threaded opening 395 formed in bottom plate 365.

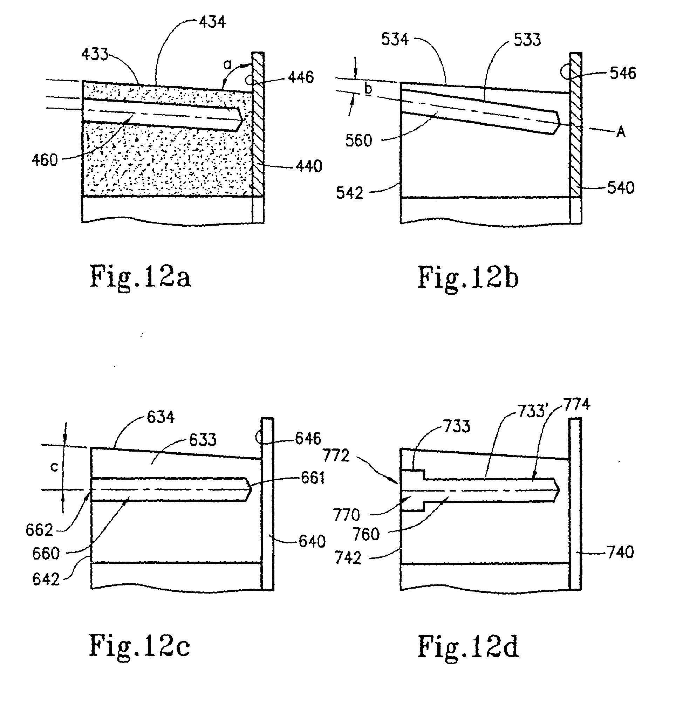

Figures 12(a) through 12(d) show four possible alternatives, in diagrammatic form, for drilling the air supply bores for the embodiment shown in Figures 8-10 as well as the embodiment shown in Figures 5 and 6. For example, in Figure 12(a), a representative air supply bore 460 is drilled along axis "A" that is parallel to air bearing surface 434. Air bearing surface 434 in turn, is formed at a large acute angle "a" with respect to datum face 446 of datum plate 440. Axis "A" is parallel to surface 434 so that air will uniformly flow through wall portion 433.

In Figure 12(b), axis "A" of air supply bore 560 is canted at a small acute angle "b" with respect to air bearing surface 534. Thus, there is a differential in the flow of air through wall 533 at a location proximate to datum face 546 of datum plate 540 and sidewall 542. The reverse is true for the embodiment shown in Figure 12(c). Here, air supply bore 660 has an axis "A" that is oriented at an acute angle "c" with respect to bearing surface 634, but here, the angle is chosen so that the mouth of air supply bore 660 is further away from air bearing surface 634 then and is terminal mount 662. Again, wall portion 633 is non-uniform between datum plate 640 and side 642 so that greater air flow occurs at a location proximate to datum face 646 than at the outer sidewall 642.

In Figure 12(d), the air supply bore 760 is formed to have a different configuration than as described above. Here, air supply bore 760 has a first region 770 proximal to mouth 772 that is counterbored to have a larger diameter that second region 774 that is distal to mouth 772. By counterboring region 770 to a larger diameter, the thickness of wall portion 733 that is proximal side 742 is thinner than the thickness of wall portion 733' that is proximal datum 740. Therefore, a greater air pressure will occur at the edge of the tape remote from datum 740. It should be expressly understood that an air supply bore could have several counterbore diameters of decreasing dimension from the top to the bottom so as to have more than two distinct regions. Furthermore, a conic air supply bore could be provided by drilling such bore with a conic bit. This would result in an air supply bore that continuously diminishes in diameter instead of having a stair-step reduction in diameter such as that show in Figure 12(d).

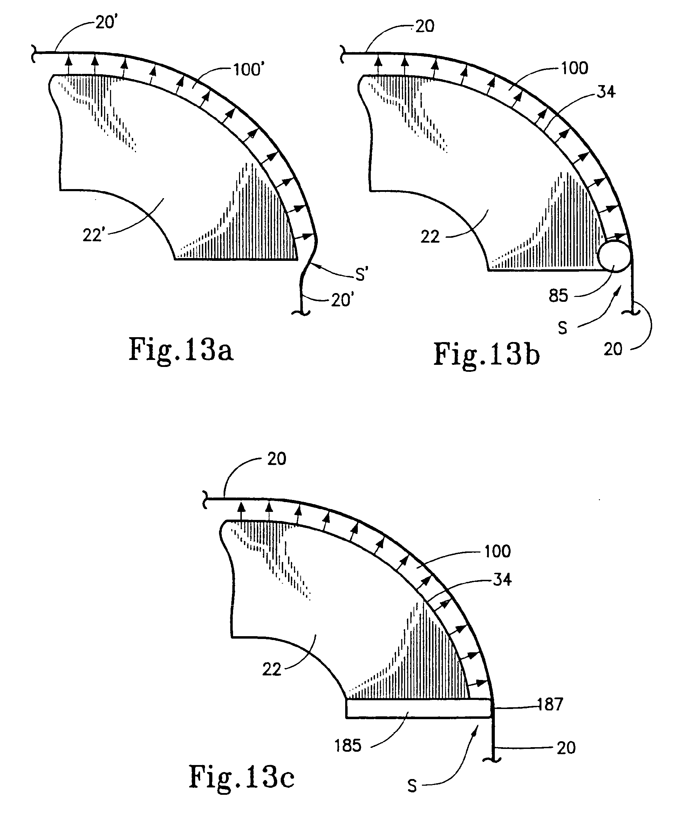

An additional feature of the present invention is the use of transverse out rigger ribs at each terminal end of the respective air bearings. To understand these out rigger ribs, reference is first made to Figures 13(a) and 13(b). With reference to Figure 13(a), It may be seen that representative tape 20' is trained over an air bearing 22' so that an air cushion 100' is present. However, air can spill out of or off of air bearing 22' in the region "S" due to the transition from the pressure of air cushion 100 to ambient pressure.

In order to eliminate this air spill, a transverse rib member or "outrigger" 85 is provided to extend across air bearing surface 34 as shown in Figure 13(b). Transverse rib element 85 acts as an air dam so that air may not readily spill from region ''S". However since tape 20 is located at a tangent to outrigger rib element 85, there is essentially no loading on tape 20 that might damage tape 20 as it passes over out- rigger element 85.

Outrigger elements 85 may be formed to have an upper curved surface 87, as is shown in Figure 13(b). Alternatively, as is shown In Figure 13(c), outrigger 185 can have a planar upper surface 187. Indeed, the planar upper surface it is currently preferred. In either case, it is preferred that the surface of the outrigger elements protrude above the air bearing surface a selected distance, depending on the air pressures used, the width of the transported tape and the fly height desired for the tape. For wider tapes, the projection of the outrigger element is generally less than for narrower tapes. In any event. It is contemplated that the protrusion of the outrigger elements be in a range of .001-.004 inches (0.025 - 0.102 mm).

Turning again to the embodiments described above, it may be seen in Figures 1 and 2 that air bearings 22 and 24 are provided at their opposite extreme ends with transverse outrigger elements 85 and 87. Likewise, the embodiment In Figures 5 and 6 are provided with transverse outrigger elements 185 and 187. In the embodiment shown In Figure 7, transverse outrigger elements 285 and 287 are provided for air bearing 224. Finally, outrigger elements 385 and 387 are provided for the embodiments shown In Figures 8-11.

In all cases, the transverse outrigger elements extends across the respective air bearing surface, but it should be understood that by using the word "transverse" it is not intended that the outrigger elements be necessarily perpendicular to the respective datum face. Rather, the outrigger elements could be oriented obliquely, although it is contemplated that, in the preferred embodiment, they be parallel to the air bearing surface. In any event, the outrigger elements are constructed of a suitable material such as solid alumina.

The embodiments of the air bearing elements according to the present invention may be made according to a simple manufacturing methodology. Here, the manufacturing methodology includes a first step of forming a porous body to a selected shape. The preferred material for forming this body, as noted above, is an alumina silicate such as that known as mullite. Alternatively, the porous material may be any suitable ceramic, metal or composite materials and may be impregnated with a selected adhesive to control porosity. The manufacturing methodology contemplates that the porous air bearing body is formed to have a dual radius surface with each portion of the dual radius surface comprising approximately 45 degrees of arc. In any event, it is contemplated that the porous air bearing body is cast, extruded, molded or otherwise fabricated in a manner known in the art.

After the porous body is formed into the desired shape, a coating is applied to all exterior surfaces of that body. This coating may be any suitable paint, epoxy or other material that is sufficient to seal the porosity of the body completely there:around. Next, the manufacturing methodology includes the step of exposing the air bearing surface by removing the coating therefrom. This can be accomplished by machining away the coating layer on the air bearing surface or using a solvent to dissolve the coating material therefrom.

In any event, the manufacturing methodology also contemplates the formation of plenums in the porous body. This can be accomplished during the formation step of the porous body. Here, any portion of the coating in the interior of the plenums that is opposite the air bearing surface must be removed. Preferably, however, the plenums are formed by drilling holes at desired locations within the porous body. This creates air supply bores so that air may be introduced into the interior of the porous body at a pressure sufficient so that air flows through the porous body and out of the air bearing surface. Here, it should be understood that the drilled holes be created such that a differential air flow occurs for the air bearing surface that is proportionate to the radius curvature of the two sections thereof so that a relatively uniform air cushion will be created when a tape is moved across the air bearing surface.

Accordingly, the present invention has been described with some degree of particularity directed to the exemplary embodiment of the present invention. It should be appreciated, though, that the present invention is defined by the following claims construed in light of the prior art so that modifications or changes may be made to the exemplary embodiment of the present invention without departing from the scope of the invention as defined in the appended claims.

## Claims

1. An air bearing system adapted for use on a tape transport apparatus to support a tape on a cushion of air as said tape is transported in a transport direction thereacross, comprising:

   (a) an air bearing member (224) including an air bearing surface (234) having a first surface portion (236) and a second surface portion (238), and

   (b) a source of pressurized air (30) communicating with said air bearing member (224), said air bearing member (224) constructed such that air escapes through the first surface portion (236) is at a greater flow rate than air that escapes from the second surface portion (238), and **characterised in that** the air bearing system also comprises,

a plenum (258) associated with said air bearing member (224) and in fluid communication with said source of pressurized air (30), and wherein said air bearing member (224) has a wall (232) with one surface thereof in fluid communication with said plenum (258) and with an opposite surface thereof defining the air bearing surface (234), said wall (232) being fabricated out of a porous material, a first portion of said wall underlying the first surface portion (236) being thinner than a second portion of said wall underlying the second surface portion (238).

2. An air bearing system according to claim 1 wherein the first surface portion is formed at a first radius of curvature and wherein the second surface portion is formed at a second radius of curvature larger than the first radius of curvature.

3. An air bearing system according to claim 1 including a rib disposed at one end of said air bearing surface and extending transversely thereacross, said rib extending upwardly from the bearing surface and operative to resist flow of air thereacross as the tape moves thereover.

4. An air bearing system according to claim 3 wherein there is a rib at each end of said air bearing surface and extending transversely thereacross.

5. An air bearing system according to claim 3 wherein said rib extends upwardly from the bearing surface a height of between .001 to .004 inch (.026 to 0.102 mm).

6. An air bearing system according to claim 1, wherein the plenum includes a first plenum portion associated with the first surface portion and a second plenum portion associated with the second surface portion, said air bearing member constructed such that air at a first pressure in the first plenum portion will pass therethrough and out of the first surface portion and air at a second pressure in the second plenum portion will pass therethrough and out of the second surface portion; and wherein said source of pressurized air communicates with the first and second plenum portions such that the first pressure is greater than said second pressure whereby the air will flow through said air bearing member and out of the air bearing surface to create the air cushion with there being a differential in the air cushion along the first and second surface portions, respectively.

7. An air bearing system according to claim 6 wherein the air bearing surface is arcuate in configuration.

8. An air bearing system according to claim 7 wherein the first surface portion is formed at a first radius of curvature and wherein the second surface portion is formed at a second radius of curvature different from the first radius of curvature.

9. A air bearing system according to claim 8 wherein the first radius of curvature is smaller than the second radius of curvature.

10. An air bearing system according to claim 7 wherein the first surface portion extends for about forty-five degrees of arc arid where the second surface portion extends for about forty-five degrees of arc.

11. An air bearing system according to claim 6 wherein said air bearing member is fabricated out of a porous material.

12. An air bearing system according to claim 11 wherein said porous material is selected from a group consisting of ceramics, metals, and composite materials.

13. An air bearing system according to claim 12 wherein said porous material is an alumina silicate.

14. An air bearing system according to claim 6 wherein the first and second plenum portions are separated by a dividing wall of porous material, said source of pressurized air being directly connected to the first plenum portion to supply air at the first pressure and with the second plenum portion being pressurized by air passing through the dividing wall.

15. An air bearing system according to claim 14 wherein said dividing wall is fabricated from a porous material selected from a group consisting of ceramics, metals, and composite materials.

16. An air bearing system according to claim 6 wherein said source of pressurized air includes distinct first and second air supplies having different pressures, said first air supply being in fluid communication with the first plenum portion and said second air supply being in fluid communication with the second plenum portion.

17. An air bearing system according to claim 6 wherein said bearing member includes a datum face operative to define a guide surface for a first lateral edge of said tape, said datum face oriented in a datum plane that is parallel to the transport direction.

18. An air bearing system according to claim 17 wherein the air bearing surface is oriented at a large acute angle with respect to the datum face.

19. An air bearing system according to claim 18 wherein said large acute angle is within a range of seventy degrees to about ninety degrees.

20. An air bearing system according to claim 6 including a rib disposed at one end of said air bearing surface and extending transversely thereacross, said rib extending upwardly from the bearing surface and operative to resist flow of air thereacross as the tape moves thereover.

21. An air bearing system according to claim 20 wherein there is a rib at each end of said air bearing surface and extending transversely thereacross.

22. An air bearing system according to claim 20 wherein said rib extends upwardly from the bearing surface a height of between .001 to .004 inch (.026 to 0.102 mm).

23. A tape transport apparatus comprising an air bearing system of any preceding claim.

**Patentansprüche**

1. Luftlagersystem, das zur Verwendung an einer Bandbeförderungsvorrichtung eingerichtet ist, um ein Band auf einem Luftkissen zu tragen, wenn das Band in einer Beförderungsrichtung darüber befördert wird, aufweisend:

(a) ein Luftlagerelement (224) einschließlich einer Luftlageroberfläche (234) mit einem ersten Oberflächenbereich (236) und einem zweiten Oberflächenbereich (238), und

(b) eine Druckluftquelle (30), die mit dem Luftlagerelement (224) kommuniziert, wobei das Luftlagerelement (224) so aufgebaut ist, dass Luft, die durch den ersten Oberflächenbereich (236) entweicht, eine größere Durchflussrate aufweist als Luft, die durch den zweiten Oberflächenbereich (238) entweicht, und **dadurch gekennzeichnet, dass** das Luftlagersystem ferner aufweist:

(c) einen Verteilerraum (258), der dem Luftlagerelement (224) zugeordnet ist und sich in Fluidkommunikation mit der Druckluftquelle (30) befindet, und wobei das Luftlagerelement (224) eine Wand (232) aufweist, von der eine Oberfläche davon in Fluidkommunikation mit dem Verteilerraum (258) steht und eine gegenüberliegende Oberfläche davon die Luftlageroberfläche (234) definiert, wobei die Wand (232) aus einem porösen Material hergestellt ist, wobei ein erster Bereich der Wand, welcher unter dem ersten Oberflächenbereich (236) liegt, dünner ist als ein zweiter Bereich der Wand, welcher unter dem zweiten Oberflächenbereich (238) liegt.

2. Luftlagersystem nach Anspruch 1, bei dem der erste Oberflächenbereich mit einem ersten Krümmungsradius ausgebildet ist und bei dem der zweite Oberflächenbereich mit einem zweiten Krümmungsradius ausgebildet ist, der größer als der erste Krümmungsradius ist.

3. Luftlagersystem nach Anspruch 1, umfassend eine Rippe, die an einem Ende der Luftlageroberfläche angeordnet ist und sich schräg darüber erstreckt, wobei die Rippe sich von der Luftlageroberfläche aufwärts erstreckt und dahingehend wirkt, einem Luftstrom darüber entgegenzuwirken, wenn sich das Band darüber bewegt.

4. Luftlagersystem nach Anspruch 3, bei dem sich eine Rippe an jedem Ende der Luftlageroberfläche befindet und sich schräg darüber erstreckt.

5. Luftlagersystem nach Anspruch 3, bei dem sich die Rippe von der Lageroberfläche aufwärts auf eine Höhe zwischen 0,001 Inch und 0,004 Inch (0,026 bis 0,102 mm) erstreckt.

6. Luftlagersystem nach Anspruch 1, bei dem der Verteilerraum einen ersten Verteilerraumbereich umfasst, der dem ersten Oberflächenbereich zugeordnet ist, und einen zweiten Verteilerraumbereich, der dem zweiten Oberflächenbereich zugeordnet ist, wobei das Luftlagerelement so aufgebaut ist, dass Luft unter einem ersten Druck in dem ersten Verteilerraumbereich dort hindurch läuft und aus dem ersten Oberflächenbereich entweicht und Luft unter einem zweiten Druck in dem zweiten Verteilerraumbereich dort hindurch läuft und aus dem zweiten Oberflächenbereich entweicht; und wobei die Druckluftquelle mit dem ersten und dem zweiten Luftverteilungsbereich so kommuniziert, dass der erste Druck größer als der zweite Druck ist, wodurch die Luft durch das Luftlagerelement fließen und aus der Luftlageroberfläche entweichen wird, um das Luftkissen zu erzeugen, wobei dort ein Druckunterschied im Luftkissen entlang des ersten bzw. des zweiten Bereichs auftritt.

7. Luftlagersystem nach Anspruch 6, bei dem die Luftlageroberfläche gebogen aufgebaut ist.

8. Luftlagersystem nach Anspruch 7, bei dem der erste Oberflächenbereich mit einem ersten Krümmungsradius ausgebildet ist und bei dem der zweite Oberflächenbereich mit einem zweiten Krümmungsradius ausgebildet ist, der größer als der erste Krümmungsradius ist.

9. Luftlagersystem nach Anspruch 8, bei dem der erste Krümmungsradius kleiner ist als der zweite Krümmungsradius.

10. Luftlagersystem nach Anspruch 7, bei dem der erste Oberflächenbereich sich über 45 Bogengrad erstreckt und bei dem der zweite Oberflächenbereich sich über 45 Bogengrad erstreckt.

11. Luftlagersystem nach Anspruch 6, bei dem das Luftlagerelement aus einem porösen Material hergestellt ist.

12. Luftlagersystem nach Anspruch 11, bei dem das poröse Material aus einer Gruppe ausgewählt wird, die Keramiken, Metalle und Verbundmaterialien umfasst.

13. Luftlagersystem nach Anspruch 12, bei dem das poröse Material ein Alumosilikat ist.

14. Luftlagersystem nach Anspruch 6, bei dem der erste und der zweite Verteilerraumbereich mittels einer Trennwand aus porösem abgeteilt sind, wobei die Druckluftquelle direkt mit dem ersten Verteilerraumbereich verbunden ist, um Luft unter dem ersten Druck zuzuführen, als auch mit dem zweiten Verteilerraumbereich, der durch Luft druckbeaufschlagt wird, die durch die Trennwand läuft.

15. Luftlagersystem nach Anspruch 14, bei dem die Trennwand aus einem porösen Material hergestellt ist, das aus der Gruppe ausgewählt wird, die Keramiken, Metalle und Verbundmaterialien umfasst.

16. Luftlagersystem nach Anspruch 6, bei dem die Druckluftquelle unterschiedliche erste und zweite Druckluftversorgungen mit unterschiedlichen Drükken umfasst, wobei die erste Druckluftversorgung in Fluidkommunikation mit dem ersten Verteilerraumbereich steht und die zweite Druckluftversorgung in Fluidkommunikation mit dem zweiten Verteilerraumbereich steht.

17. Luftlagersystem nach Anspruch 6, bei dem das Lagerelement eine Bezugsfläche umfasst, die dazu dient, eine Führungsoberfläche für eine erste Seitenkante des Bandes zu definieren, wobei die Bezugsfläche in einer Bezugsebene ausgerichtet ist, welche parallel zur Transportrichtung liegt.

18. Luftlagersystem nach Anspruch 17, bei dem die Luftlageroberfläche unter einem großen spitzen Winkel in Bezug auf die Bezugsfläche ausgerichtet ist.

19. Luftlagersystem nach Anspruch 18, bei dem der große spitze Winkel sich im Bereich von 70 Grad bis ca. 90 Grad befindet.

20. Luftlagersystem nach Anspruch 6, , umfassend eine Rippe, die an einem Ende der Luftlageroberfläche angeordnet ist und sich schräg darüber erstreckt, wobei die Rippe sich von der Luftlageroberfläche aufwärts erstreckt und dahingehend wirkt, einem Luftstrom darüber entgegenzuwirken, wenn sich das Band darüber bewegt.

21. Luftlagersystem nach Anspruch 20, bei dem sich eine Rippe an jedem Ende der Luftlageroberfläche befindet und sich schräg darüber erstreckt.

22. Luftlagersystem nach Anspruch 20, bei dem sich die Rippe von der Lageroberfläche auf einer Höhe zwischen 0,001 Inch und 0,004 Inch (0,026 bis 0,102 mm) erstreckt.

23. Bandtransportvorrichtung, aufweisend ein Luftlagersystem nach einem der vorhergehenden Ansprüche.

## Revendications

1. Système de roulement sur coussin d'air adapté pour être utilisé sur un dispositif de transport de bande pour supporter une bande sur un coussin d'air lorsque ladite bande est transportée dans une direction de transport, comprenant :

   (a) un élément de roulement sur coussin d'air (224) comprenant une surface de roulement sur coussin d'air (234) ayant une première partie de surface (236) et une seconde partie de surface (238), et
   (b) une source d'air sous pression (30) communiquant avec ledit élément de roulement sur coussin d'air (224), ledit élément de roulement sur coussin d'air (224) étant construit de sorte que l'air qui s'échappe par la première partie de surface (236) est à un débit supérieur à l'air qui s'échappe par la seconde partie de surface (238), et **caractérisé en ce que** le système de roulement sur coussin d'air comprend également :

   un plenum (258) associé avec ledit élément de roulement sur coussin d'air (224) et en communication de fluide avec ladite source d'air sous pression (30) et dans lequel ledit élément de roulement sur coussin d'air (224) a une paroi (232) avec sa surface en communication de fluide avec ledit plenum (258) et avec sa surface opposée définissant la surface de roulement sur coussin d'air (234), ladite paroi (232) étant fabriquée avec un matériau poreux, une première partie de ladite paroi se trouvant au-dessous de la première partie de surface (236) qui est plus fine qu'une seconde partie de ladite paroi se trouvant sous la seconde partie de surface (238).

2. Système de roulement sur coussin d'air selon la revendication 1, dans lequel la première partie de surface est formée à un premier rayon de courbure et dans lequel la seconde partie de surface est formée à un second rayon de courbure supérieur au premier rayon de courbure.

3. Système de roulement sur coussin d'air selon la revendication 1, comprenant une nervure disposée au niveau d'une extrémité de ladite surface de roulement sur coussin d'air et s'étendant de manière transversale sur celle-ci, ladite nervure s'étendant vers le haut à partir de la surface de roulement et est opérationnelle pour résister à l'écoulement d'air sur celui-ci lorsque la bande se déplace sur celui-ci.

4. Système de roulement sur coussin d'air selon la revendication 3, dans lequel on trouve une nervure au niveau de chaque extrémité de ladite surface de roulement sur coussin d'air et s'étendant de manière transversale sur celle-ci.

5. Système de roulement sur coussin d'air selon la revendication 3, dans lequel ladite nervure s'étend vers le haut à partir d'une surface de roulement, sur une hauteur comprise entre 0,001 à 0,004 pouces (0,026 à 0,102 mm).

6. Système de roulement sur coussin d'air selon la revendication 1, dans lequel le plenum comprend une première partie de plenum associée à la première partie de surface et une seconde partie de plenum associée à la seconde partie de surface, ledit élément de roulement sur coussin d'air étant construit de sorte que l'air à une première pression dans la première partie de plenum passe à travers et à l'extérieur de la première partie de surface et l'air à une seconde pression dans la seconde partie de plenum passe à travers et à l'extérieur de la seconde partie de surface ; et dans lequel ladite source d'air sous pression communique avec les première et seconde parties de plenum de sorte que la première pression est supérieure à ladite seconde pression moyennant quoi l'air s'écoule à travers ledit élément de roulement sur coussin d'air et à l'extérieur de la surface de roulement sur coussin d'air pour créer le coussin d'air avec celui-ci, à ce niveau-là on trouve un différentiel dans le coussin d'air le long des première et seconde parties de surface, respectivement.

7. Système de roulement sur coussin d'air selon la revendication 6, dans lequel la surface de roulement sur coussin d'air a une configuration arquée.

8. Système de roulement sur coussin d'air selon la revendication 7, dans lequel la première partie de surface est formée à un premier rayon de courbure et dans lequel la seconde partie de surface est formée à un second rayon de courbure différent du premier rayon de courbure.

9. Système de roulement sur coussin d'air selon la revendication 8, dans lequel le premier rayon de courbure est inférieur au second rayon de courbure.

10. Système de roulement sur coussin d'air selon la revendication 7, dans lequel la première partie de surface s'étend sur environ quarante cinq degrés d'arc et où la seconde partie de surface s'étend sur environ quarante cinq degrés d'arc.

11. Système de roulement sur coussin d'air selon la revendication 6, dans lequel ledit élément de roulement sur coussin d'air est fabriqué avec un matériau poreux.

12. Système de roulement sur coussin d'air selon la revendication 11, dans lequel ledit matériau poreux est choisi dans un groupe comprenant les céramiques, les métaux et les matériaux composites.

13. Système de roulement sur coussin d'air selon la revendication 12, dans lequel ledit matériau poreux est un silicate d'alumine.

14. Système de roulement sur coussin d'air selon la revendication 6, dans lequel les première et seconde parties de plenum sont séparées par une paroi de séparation en matériau poreux, ladite source d'air sous pression étant directement raccordée à la première partie de plenum pour alimenter l'air à la première pression et avec la seconde partie de plenum qui est sous pression par l'air passant par la paroi de séparation.

15. Système de roulement sur coussin d'air selon la revendication 14, dans lequel ladite paroi de séparation est fabriquée avec un matériau poreux choisi dans le groupe comprenant les céramiques, les métaux et les matériaux composites.

16. Système de roulement sur coussin d'air selon la revendication 6, dans lequel ladite source d'air sous pression comprend des première et seconde alimentations d'air distinctes ayant des pressions différentes, ladite première alimentation d'air étant en communication de fluide avec la première partie de plenum et ladite seconde alimentation d'air étant en communication de fluide avec la seconde partie de plenum.

**17.** Système de roulement sur coussin d'air selon la revendication 6, dans lequel ledit élément de roulement comprend une face de référence pouvant fonctionner pour définir une face de guidage pour un premier bord latéral de ladite bande, ladite face de référence étant orientée dans un plan de référence qui est parallèle à la direction de transport.

**18.** Système de roulement sur coussin d'air selon la revendication 17, dans lequel la surface de roulement sur coussin d'air est orientée selon un grand angle aigu par rapport à la face de référence.

**19.** Système de roulement sur coussin d'air selon la revendication 18, dans lequel ledit grand angle aigu est compris entre soixante dix degrés et environ quatre vingt dix degrés.

**20.** Système de roulement sur coussin d'air selon la revendication 6, comprenant une nervure disposée au niveau d'une extrémité de ladite surface de roulement sur coussin d'air et s'étendant de manière transversale sur celle-ci, ladite nervure s'étendant vers le haut à partir de la surface de roulement et est opérationnelle pour résister à l'écoulement d'air sur celle-ci lorsque la bande se déplace sur celle-ci.

**21.** Système de roulement sur coussin d'air selon la revendication 20, dans lequel on trouve une nervure au niveau de chaque extrémité de ladite surface de roulement sur coussin d'air et s'étendant transversalement sur celle-ci.

**22.** Système de roulement sur coussin d'air selon la revendication 20, dans lequel ladite nervure s'étend vers le haut à partir de la surface de roulement à une hauteur comprise entre 0,001 à 0,004 pouces (0,026 à 0,102 mm).

**23.** Dispositif de transport de bande comprenant un système de roulement sur coussin d'air selon l'une quelconque des revendications précédentes.

Fig.1

Fig.2

Fig.3

Fig.4

Fig.5

PRESSURED
AIR SUPPLY

Fig.6

Fig.7

Fig.9

Fig.10

Fig.11

Fig.8

EP 1 249 017 B1

Fig.12a

Fig.12b

Fig.12c

Fig.12d

Fig.13a

Fig.13b

Fig.13c